# EUROPÄISCHE PATENTSCHRIFT

(11) **EP 1 332 985 B1**
(45) Veröffentlichungstag und Bekanntmachung des Hinweises auf die Patenterteilung: **31.03.2004**
(21) Anmeldenummer: 02001671.3
(22) Anmeldetag: 24.01.2002
(51) Int. Cl.: B65D 85/18, B65G 1/00, B63B 25/24

(54) **Tragstange für Kleidungstücke die auf Kleiderbügeln hängen**
Garments hanging bar
Barre porte-cintres a vetements

(43) Veröffentlichungstag der Anmeldung: 06.08.2003
(73) Patentinhaber: Wistra Handelsges. mbH, 23923 Selmsdorf (DE)
(72) Erfinder: Born, Kurt-Rudolf, 23923 Herrnburg (DE)
(74) Vertreter: Vollmann, Heiko, Dipl.-Ing.

(56) Entgegenhaltungen:
- EP-A- 0 495 384
- EP-A- 1 013 504
- FR-A- 2 163 596

## Beschreibung

Die Erfindung betrifft eine Transportstange mit den im Oberbegriff des Anspruchs 1 angegebenen Merkmalen sowie ein Verankerungselement für eine solche Transportstange.

Transportstangen dieser Art sind beispielsweise in der EP-A- 1 013 504 beschrieben und werden üblicherweise in Transportbehältern wie beispielsweise Kastenaufbauten von Lastkraftwagen oder Containern eingesetzt, um auf Kleiderbügeln angeordnete Bekleidungsstücke möglichst platzsparend und knitterfrei zu transportieren. Weil die Transportbehälter universell einsetzbar sind, werden sie, wenn auf Kleiderbügeln angeordnete Bekleidungsstücke zu transportieren sind, mit derartigen Transportstangen ausgerüstet, die dann in entsprechender Anzahl und Anordnung an den Behälterwänden festgelegt werden. Die Behälterwände weisen hierzu üblicherweise vertikale Tragelemente in Form von Lochblechen auf, in deren Ausnehmungen die Transportstangen mit ihren Verankerungselementen formschlüssig eingehakt werden.

Solche Transportstangen werden in größerer Zahl benötigt und sind konstruktiv aufwändig gestaltet. So besteht die Transportstange nach der vorerwähnten EP-A- 1 103 504 aus einem langgestreckten, rohrförmigen Körper, an dessen Enden je ein Verankerungselement angeordnet ist, wobei diese beiden Elemente zum formschlüssigen Eingriff in die Ausnehmungen in den Lochblechen vorgesehen sind. Diese Verankerungselemente weisen jeweils einen in den rohrförmigen Körper eingesetzten Führungszapfen und einen Verankerungskopf zum formschlüssigen Einsetzen der Transportstange in die Ausnehmungen von Tragelementen auf, wobei der Zapfen und der Kopf zusammen einstückig ausgebildet sind. Die Transportstange hat ferner einen sich parallel zu dem rohrförmigen Körper erstreckenden, teleskopierbaren Sicherungsbügel, der über Gelenkmittel mit dem rohrförmigen Körper verbunden ist und der in einer ersten Stellung die Kleiderbügel gegen unbeabsichtigtes Ausklinken von dem rohrförmigen Körper sichert und in einer zweiten Stellung diese frei gibt. Um einerseits sicher zu stellen, dass die Transportstange sicher innerhalb der Ausnehmungen der vertikalen Tragelemente verankert ist, und andererseits ein leichtes Ein- und Aushängen zu gewährleisten, ist es vorteilhaft, zumindest eines der Verankerungselemente entgegen Federkraft gegenüber dem langgestreckten, rohrförmigen Körper ausziehbar oder einschiebbar auszubilden, damit der eigentliche Verankerungskopf in die ihm zugeordnete Ausnehmung eingeführt und nachfolgend durch Federkraft in eine Stellung verbracht oder darin gesichert wird, in der Formschluss in sämtlichen kraftbeaufschlagten Richtungen besteht. Hierzu ist der axial bewegliche Verankerungskopf an einem Metallrohrabschnitt befestigt, in dem ein Federelement geführt ist. Dieser Rohrabschnitt ist in dem langgestreckten, rohrförmigen Körper eingeführt und darin formschlüssig so gesichert, dass beim Ausziehen des Verankerungselementes die Federkraft wirksam wird. Es sind auch Konstruktionen bekannt, bei denen die Federkraft in Einschubrichtung wirkt oder die ohne Feder arbeiten.

Der vorstehende Aufbau der Transportstange ist nicht nur herstellungstechnisch kompliziert und aufwändig, es sind zudem erhebliche Montagearbeiten erforderlich und darüber hinaus ist eine Vielzahl von Bauteilen herzustellen und zu bevorraten.

Vor diesem Hintergrund liegt der Erfindung die Aufgabe zugrunde, eine gattungsgemäße Transportstange so auszubilden, dass ihr Aufbau vereinfacht und ihre Herstellung insbesondere bei größeren Stückzahlen verbilligt ist.

Diese Aufgabe wird gemäß der Erfindung durch die in Anspruch 1 angegebenen Merkmale gelöst. Wesentlich für den vereinfachten Aufbau ist das erfindungsgemäße Verankerungselement, insbesondere wie es in Anspruch 9 gekennzeichnet ist.

Grundgedanke der vorliegenden Erfindung ist es, das Verankerungselement, im Wesentlichen bestehend aus dem eigentlichen Verankerungskopf, einen in dem rohrförmigen Körper eintauchenden Führungszapfen sowie einem dazwischen vorgesehenen Flanschabschnitt einstückig als Gußteil auszubilden. Hierdurch wird die Teilevielfalt in ganz erheblichem Maße reduziert, der Montageaufwand vereinfacht und damit die Herstellungskosten verringert. Die erfindungsgemäße Transportstange weist zwei solcher einstückig ausgebildeten Verankerungselemente an jedem Ende auf, wobei je nach konstruktiver Ausgestaltung keines, eines oder beide gegen Federkraft nach außen teleskopierbar oder nach innen einschiebbar sind.

Derartige, einstückig ausgebildete Verankerungselemente werden bevorzugt kostengünstig als Kunststoffspritzgußteile ausgebildet; es können jedoch Verankerungselemente aus Metall, insbesondere als Leichtmetalldruckgussteile, ausgebildet sein.

Bevorzugt werden die beiden Verankerungselemente schon aus Kostengründen aus Kunststoff hergestellt, was darüber hinaus auch den Vorteil hat, dass beim Einsetzen bzw. beim Aushaken der Transportstangen praktisch kein Verschleiß an den Lochblechen auftritt, die in der Regel nicht oder nur schwer austauschbar sind. Gegebenenfalls können die besonders beanspruchten Bereiche der Verankerungselemente, wie insbesondere der Führungszapfen, mit einer verschleißfesten Schicht, beispielsweise einer Metallschicht, versehen sein. Es können in diesem Bereich auch Metallabschnitte oder ein Metallrohr in das Spritzgußwerkzeug eingelegt sein, um auf diese Weise einen Verbundkörper herzustellen, der besonders verschleißfest ist.

Der vorerwähnte, teleskopierbare Sicherungsbügel ist üblicherweise an der Transportstange jeweils endseitig angelenkt und derart verschwenkbar zur Transport-stange angeordnet, dass sich eine transportstangennahe Sicherungsstellung ergibt, in welcher die auf der Transportstange eingehängten Kleiderbügel durch den Sicherungsbügel formschlüssig auf der Transportstange gehalten sind, und eine Beund Entladestellung, in welcher sich der Sicherungsbügel mit deutlichem Abstand zur Transportstange befindet, so dass sich ein ausreichender Freiraum zum Aushängen bzw. Einhängen der Kleiderbügel ergibt.

Ein solcher Sicherungsbügel ist üblicherweise in einem bestimmten Winkel, von beispielsweise etwa 30° zur Längsachse des Verankerungskopfes angeordnet, um die Handhabung und die Krafteinwirkung günstig zu gestalten. Gemäß der Erfindung kann sich der Flanschabschnitt zumindest über diesen Winkelbereich zu beiden Seiten der Längsachse des Verankerungskopfes quer zur Längsachse des Führungszapfens erstrecken, so dass der Sicherungsbügel je nach Anordnung des Verankerungselements auf der rechten oder linken Seite der Transportstange an der einen oder anderen Seite des Flanschabschnitts angelenkt werden kann. Dabei ist der Flanschabschnitt bevorzugt mit zwei Bohrungen etwa im 30° Abstand zu der Längsachse des Verankerungskopfes versehen, wobei je nach Anordnung die eine oder andere Bohrung zur Anlenkung des Sicherungsbügels genutzt wird.

Gemäß der Erfindung ist eine weitere Bohrung im Flanschabschnitt des Verankerungselementes vorgesehen, und zwar mittig zwischen den Bohrungen, die zum Anlenken des Sicherungsbügels dienen. Diese Bohrung liegt jedoch radial mit nur geringem Abstand zur Außenseite des Führungszapfens und ist für ein alternatives Sicherungsmittel vorgesehen. Es kann also statt des Sicherungsbügels mittels dieser mittigen Bohrungen in jedem Flanschabschnitt ein elastisches Element, wie beispielsweise ein elastisches Seil zwischen den Flanschabschnitten gespannt werden, das die eingeklinkten Kleiderbügel sichert.

Vorteilhaft ist die Schraubenfeder, welche beim Auszug des Verankerungselements aus dem rohrförmigen Körper eine Zugkraft zwischen diesen Bauteilen erzeugt, ebenfalls im Verankerungselement integriert. Hierzu ist im Führungszapfen eine Sacklochbohrung vorgesehen, in der eine Schraubenfeder festgelegt ist. Diese Schraubenfeder wird nach Einsetzen durch einen Querstift am Ende des Führungszapfens formschlüssig gesichert. Weiterhin weist der Führungszapfen eine radiale und in Richtung seiner Längsachse verlaufende durchgehende Ausnehmung auf, in welcher ein Stift geführt ist, der mittelbar oder unmittelbar im rohrförmigen Körper quer zu diesem festgelegt ist, derart, dass beim Herausziehen des Führungszapfens aus dem rohrförmigen Körper dieser Stift an der Schraubenfeder anliegt und diese spannt. Diese Anordnung ist besonders günstig, da somit auch die für die Aufbringung der Federkraft erforderlichen Bauteile innerhalb des Verankerungselementes liegen, und die Verbindung zwischen Verankerungselement und rohrförmigen Körper lediglich durch einen Querstift zu erfolgen hat. Dieser Querstift sichert dann nicht nur formschlüssig das Verankerungselement gegenüber dem rohrförmigen Körper, sondem überträgt darüber hinaus auch die Federkräfte. Durch diese Anordnung ist die Montage besonders günstig, da das Verankerungselement mit Feder und diese sicherenden Stift vormontiert wird, wonach die Transportstange durch Ensetzen der Verankerungselemente an beiden Enden des rohrförmigen Körpers und Sicherung durch Querstifte fertig montiert wird.

Die lichten Abstände zwischen den Lochblechen variieren in gewissen Grenzen je nach eingesetztem Behälter. Um hier für eine Vielzahl unterschiedlicher Behälter baugleiche Transportstangen einsetzen zu können, ist gemäß der Erfindung ein Adapterteil vorgesehen, das innerhalb des Führungszapfens angeordnet und mit diesem verbunden ist und mehrere, in Achsrichtung des Zapfens gesehen, hintereinander liegende Bohrungen im Bereich der Längsausnehmung aufweist, in welche der Querstift wahlweise einsetzbar ist. Je nach Wahl der Bohrung, in welcher der die Verbindung zum rohrförmigen Körper herstellende Querstift eingesetzt wird, ist die Länge der Transportstange unterschiedlich. Dieses Adapterteil ist also für dasjenige Ende der Transportstange vorgesehen, an der das ortsfeste Verankerungselement montiert ist. Es kann in einfacher Weise durch ein langgestrecktes Metallstück gebildet sein, das mehrere Bohrungen entlang seiner Längsmittelachse aufweist, die zur Längenanpassung wahlweise belegbar sind.

Das erfindungsgemäße Verankerungselement kann also wahlweise als feststehendes oder aber auch als ausziehbares Verankerungselement eingesetzt werden, ohne dass es eine konstruktive Veränderung erfahren muss. Es kann also ein und dasselbe Bauteil für beide Einsatzzwecke verwendet werden, wobei für den Einsatz als feststehendes Verankerungselement zusätzlich die Option des Adapterteils gegeben ist, die es ermöglicht, das Verankerungselement in unterschiedlichen Auszugstellungen an dem langgestreckten, rohrförmigen Körper zu fixieren.

Die Erfindung ist nachfolgend anhand eines in der Zeichnung dargestellten Ausführungsbeispiels näher erläutert. Es zeigen:
- Fig. 1: eine teilweise im Schnitt dargestellte Transportstange,
- Fig. 2: einen Schnitt längs der Schnittlinie 11 - II in Fig. 1,
- Fig. 3: in vergrößerter Darstellung das linksseitige Ende der in Fig. 1 dargestellten Transportstange,
- Fig. 4: die Anordnung nach Fig. 3 in anderer Stellung,
- Fig. 5: die Anordnung nach Fig. 3 mit Ensatz eines Adapterteils,
- Fig. 6: einen Längsschnitt durch ein Verankerungselement,
- Fig. 7: ein Schnitt längs der Schnittlinie VII - VII in Fig. 6 in um 90 ° gedrehter Stellung,
- Fig. 8: eine Seitenansicht des Verankerungselements und
- Fig. 9: eine Stirnansicht des Verankerungselements.

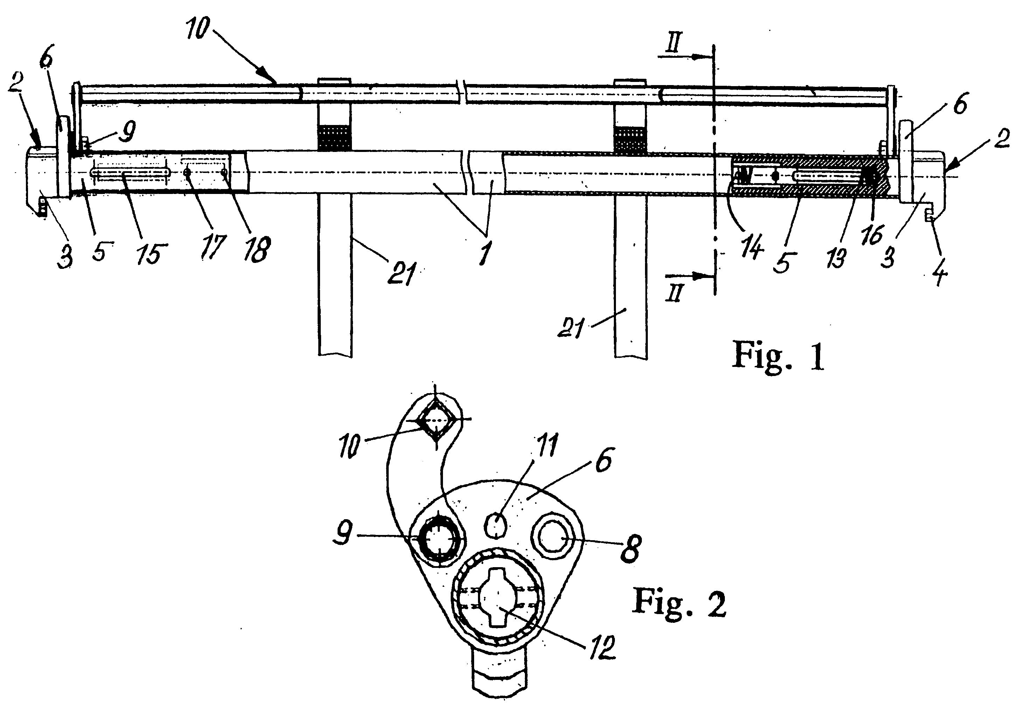

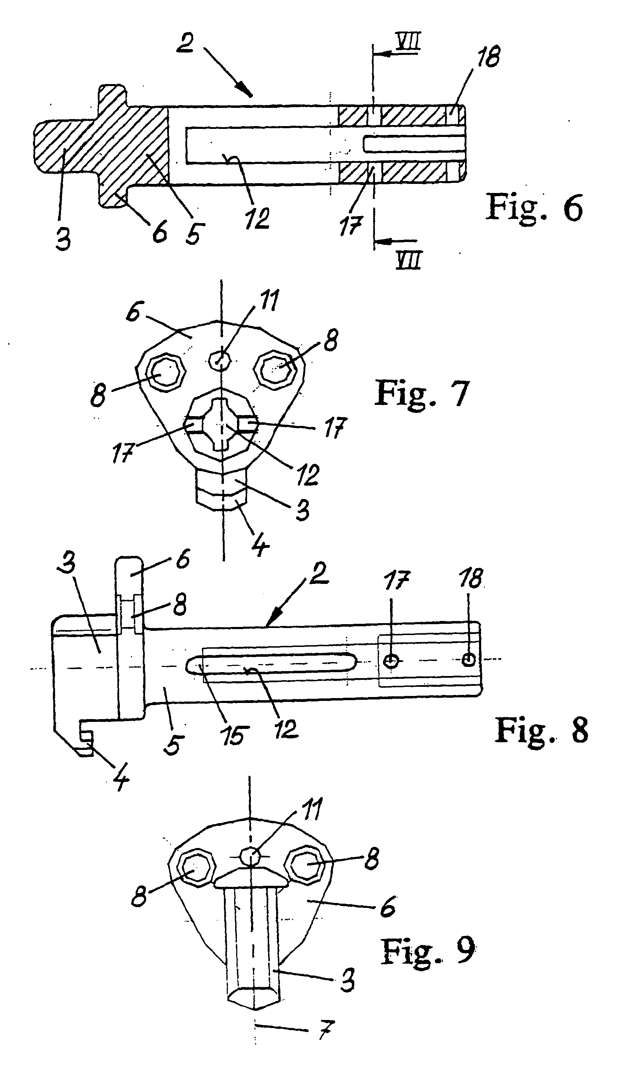

Die in Fig. 1 dargestellte Transportstange weist ein sich nahezu über die gesamte Länge erstreckendes Rohr 1 auf, an dessen beiden Enden Verankerungselemente 2 eingegliedert sind. Die Verankerungselemente 2 sind identisch ausgebildet, nämlich so wie anhand der Fig. 6 bis 9 dargestellt, jedoch in Fig. 1 linksseitig fest und rechtsseitig ausziehbar angeordnet. Sie weisen je einen Verankerungskopf 3 auf, mit dem das Verankerungselement 2 bzw. die gesamte Transportstange in an sich bekannter Weise in entsprechenden Ausnehmungen in den Seitenwänden eines Fahrzeugsaufbaus verankerbar ist.

Der Verankerungskopf 3 weist die aus den Fig. 8 und 9 sich ergebende langgestreckte Form auf, er wird in eine entsprechende Ausnehmung eingeführt, bis seine Verriegelungsnase 4 den Rand der Ausnehmung vollständig überwunden hat, sodann nach unten abgesenkt und schließlich zurückgezogen, so dass die Verriegelungsnase 4 den Kopf 3 formschlüssig im Kragen der Ausnehmung fixiert.

Weiterhin weist das Verankerungselement 2 einen zylindrischen Führungszapfen 5 auf, der zum Einschieben in das Rohr 1 vorgesehen ist (siehe. Fig. 1). Zwischen Führungszapfen 5 und Verankerungskopf 3 ist ein Flanschabschnitt 6 vorgesehen, der die aus den Fig. 7 und 9 ersichtliche Form hat, sich radial gegenüber dem Außenumfang des Führungszapfens 5 erhebt, um einen Anschlag beim Einschieben des Führungszapfens 5 in das Rohr 1 zu bilden. Gegenüber dem Verankerungskopf erhebt sich der Flanschabschnitt radial nur nach oben und zur Seite, nach unten hingegen geht er bündig in den Verankerungskopf 3 über. Bezogen auf die Längsachse 7 des Verankerungskopfes 3 erstreckt sich der Flanschabschnitt 6 im Wesentlichen um etwa 30 °zu beiden Seiten, und zwar nach oben. Dort weist er zwei Bohrungen 8 auf, die symmetrisch zu beiden Seiten der Längsachse 7 angeordnet sind. Diese Bohrungen 8 sind zum Einsatz von Gewindebuchsen vorgesehen, und zwar wird je nach Anordnung des Verankerungselements (rechts- oder linksseitig) entweder in der einen oder der anderen Bohrung 8 eine Gewindebuchse vorgesehen, in welcher ein Schraubenbolzen 9 festgelegt ist, der das eine Ende eines Sicherungsbügels 10 schwenkbar lagert.

Weiterhin ist innerhalb des Flanschabschnitts 6 zwischen den Bohrungen 8 jedoch mit geringerem radialem Abstand zum Außenumfang des Führungszapfens 5 eine weiter Bohrung 11 vorgesehen, die zur Anbringung eines elastischen Seils als alternatives Sicherungsmittel für die Kleiderbügel dient.

Der Führungszapfen 5 weist eine Sacklochbohrung 12 auf, die zur Aufnahme einer Schraubenfeder 13 vorgesehen ist. Die Schraubenfeder ist mittels eines Querstiftes 14 innerhalb des Führungszapfens gegen herausfallen gesichert. Am anderen Ende liegt die Feder 13 am Boden der Sacklochbohrung an. Weiterhin weist der Führungszapfen eine den Zapfen radial durchsetztende Längsausnehmung 15 auf, die parallel zur Längsachse des Zapfens verläuft, etwa auf halber Länge der Sacklochbohrung 12 beginnt und kurz vor dem Flanschabschnitt 6 endet (siehe Fig. 8). Diese Längsausnehmung 15 dient zur Führung eines Querstiftes 16, der die Längsausnehmung 15 sowie das diese umschließende Rohr 1 durchsetzt und dort festgelegt ist. Auf diese Weise legt der Querstift 16 das Verankerungselement 2 formschlüssig im Rohr 1 fest, die zwischen den Querstiften 14 und 16 liegende Feder 13 wird beim Ausziehen des Verankerungselements 2 aus dem Rohr 1 gespannt, so dass das Verankerungselement 2 durch Federkraft selbststätig zurückgezogen wird.

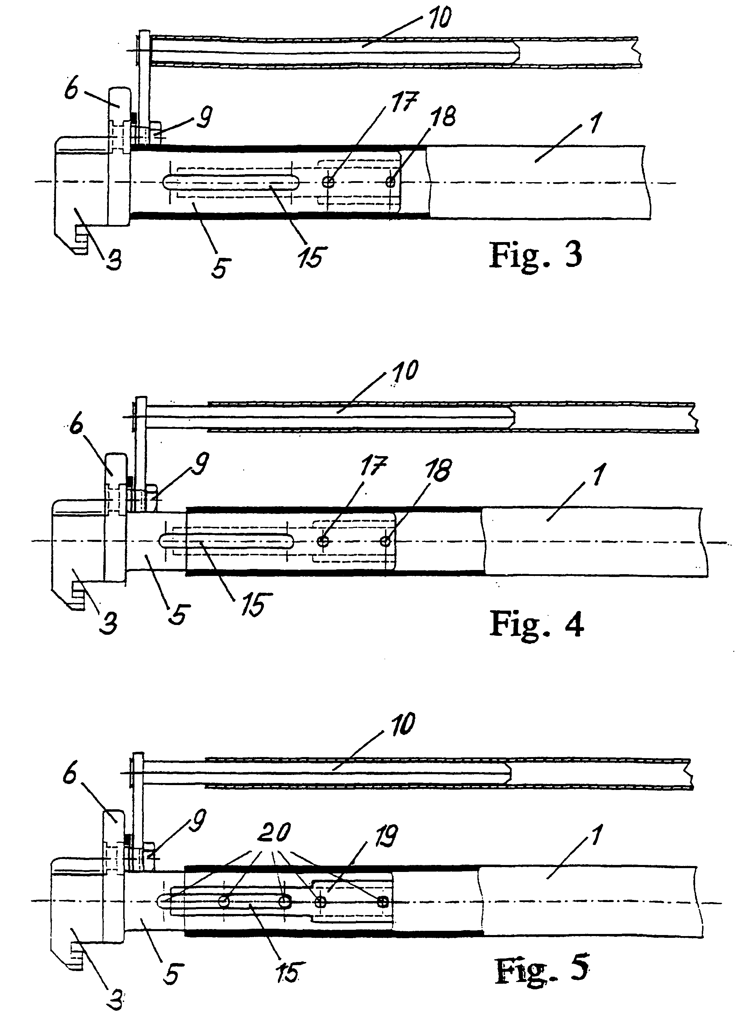

Das Verankerungselement 2 weist im Bereich des Führungszapfens 5 neben der Bohrung 17 für den Querstift 14 eine weitere Bohrung 18 auf. Wenn das Verankerungselement einseitig fest montiert werden soll, dann wird das Rohr 1 durch die Bohrungen 17 und 18 und fluchtende Bohrungen im Rohr mit dem Verankerungselement vernietet und damit festgelegt. Ein solch festgelegtes Verankerungselement ist in Fig. 1 linksseitig dargestellt. Wie aus Fig. 3 im Einzelnen ersichtlich, ist dort das Verankerungselement 2 bis zum Anschlag 6 in das Rohr 1 eingeschoben und dann durch zwei (nicht dargestellte) Niete, welche durch die Bohrungen 17 und 18 sowie fluchtende Bohrungen im Rohr geführt sind, festgelegt.

Anhand von Fig. 4 ist veranschaulicht, wie durch Variation der Anordnung der zu den Bohrungen 17 und 18 fluchtenden Bohrungen im Rohr die Stellung des feststehenden Verankerungselementes 2 und damit die Länge der Transportstange verändert werden kann.

Anhand von Fig. 5 ist dargestellt, wie die Längenvariation der Transportstange bei gleichbleibender Länge des Rohrs 1 weiter vergrößert werden kann. Hierzu ist eine Adapaterplatte 19 vorgesehen. Zum definierten Einführen der Adapterplatte in das Verankerungselement 2 ist die Sacklochbohrung 12 mit gegenüberliegenden Nuten versehen, in welche die Adapterplatte 19 eingreift. Die Adapterplatte 19 ist bis in dem Bereich der Längsausnehmung 15 einschiebbar, wo sie beispielsweise zwei Ausnehmungen 20 aufweist, durch die ein Niet- oder Querstift als feste Verbindung mit dem Rohr 1 geführt werden kann. Das andere Ende der Adapterplatte ist über Querstifte, die in den Bohrungen 17 und 18 angeordnet sind, fest mit dem Führungszapfen 5 verbunden. Die Adapterplatte kann als einfaches Stanzteil aus Blech ausgebildet sein und erhöht die Längenvarianz der Transportstange.

Die Anlenkung des Sicherungsbügels mittels der Schrauben 9 ist anhand der Fig. 1 bis 5 im Einzelnen dargestellt, der Bügel ist ebenfalls teleskopbierbar, um der Längenvarianz der eigentlichen Transportstange folgen zu können. Die Darstellungen in den Figuren zeigen die geöffnete Bügelstellung. Bei geschlossener Bügelstellung liegt der Bügel 10 praktisch unter Eingliederung der Kleiderbügel am Rohr 1 an, gesichert wird er durch zwei Klettbänder 21, die in an sich bekannter Weise um Rohr und Bügel geschlungen werden und diesen gegen Öffnen sichern.

Der anhand der vorstehenden Ausführungen beschriebene Verankerungskopf ist nur beispielhaft zu verstehen, es können eine Vielzahl unterschiedlicher Verankerungsköpfe jeweils einstückig mit den übrigen Funktionsteilen des Verankerungselementes ausgebildet werden, wie sie zum Einsatz mit unterschiedlichen Transportsicherungssystemen Verwendung finden.

### Bezugszeichenliste

- 1 -: Rohr
- 2 -: Verankerungselement
- 3 -: Verankerungskopf
- 4 -: Verriegelungsnase
- 5 -: Führungszapfen
- 6 -: Flanschabschnitt
- 7 -: Längsachse
- 8 -: Bohrungen
- 9 -: Schrauben
- 10 -: Sicherungsbügel
- 11 -: Bohrung
- 12 -: Sacklochbohrung
- 13 -: Schraubenfeder
- 14 -: Querstift
- 15 -: Längsausnehmung
- 16 -: Querstift
- 17 -: Bohrung für Querstift
- 18 -: Bohrung für Querstift
- 19 -: Adapterplatte
- 20 -: Ausnehmungen
- 21 -: Klettbänder

## Patentansprüche

1. Transportstange, insbesondere zum Aufnehmen von auf Kleiderbügeln angeordneten Bekleidungsstücken, umfassend einen rohrförmigen lang gestreckten Körper (1), jeweils ein an den beiden Enden dieses Körpers vorgesehenes Verankerungselement (2), wobei diese beiden Verankerungselemente jeweils einen in den rohrförmigen Körper (1) eingesetzten Führungszapfen (5) und einen Verankerungskopf (3) zum formschlüssigen Einsetzen der Transportstange in Ausnehmungen von Tragelementen aufweisen und dieser Zapfen und dieser Kopf zusammen einstückig ausgebildet sind, und einen sich parallel zu dem rohrförmigen Körper (1) erstreckenden, teleskopierbaren Sicherungsbügel (10), der in einer ersten Stellung die Kleiderbügel gegen unbeabsichtigtes Ausklinken von dem rohrförmigen Körper sichert und in einer zweiten Stellung diese frei gibt, **dadurch gekennzeichnet, dass** die beiden Verankerungselemente (2) je im Bereich zwischen ihrem Führungszapfen (5) und ihrem Verankerungskopf (3) einen Flanschabschnitt (6) aufweisen, der einen Anschlag für den Führungszapfen beim Einsetzen in den rohrförmigen Körper (1) bildet und der Mittel (8, 9) zum Anlenken des Sicherungsbügels (10) aufweist, und dass der Verankerungskopf (3), der Führungszapfen (5) und der Flanschabschnitt (6) einstückig als Gussteil ausgebildet sind.

2. Transportstange nach Anspruch 1, **dadurch gekennzeichnet, dass** die beiden Verankerungselemente (2) als Kunststoffspritzgussteile sind.

3. Transportstange nach Anspruch 1 oder 2, **dadurch gekennzeichnet, dass** die beiden Verankerungselemente (2) insbesondere im Bereich ihres Führungszapfens (5) mit einer gegenüber dem Grundmaterial härten Schicht, vorzugsweise einer Metallschicht, versehen sind.

4. Transportstange nach Anspruch 1, 2 oder 3, **dadurch gekennzeichnet, dass** der Flanschabschnitt (6) zwei parallel zur Längsachse des Führungszapfens (5) und symmetrisch zu einer Längsachse (7) des Verankerungskopfes (3) angeordnete Bohrungen(8) aufweist, von den je nach Seite der Anordnung des Verankerungselementes (2) die eine oder die andere Bohrung zum Anlenken des Sicherungsbügels (10) dient.

5. Transportstange nach Anspruch 4, **dadurch gekennzeichnet, dass** der Flanschabschnitt (6) eine weitere, mittig zwischen den beiden Bohrungen (8) zum Anlenken des Sicherungsbügels (10) liegende Bohrung (11) aufweist.

6. Transportstange nach einem der vorstehenden Ansprüche, **dadurch gekennzeichnet, dass** der Führungszapfen (5) eine Sacklochbohrung (12) aufweist, in der eine Schraubenfeder (13) festgelegt ist, und dass der Führungszapfen (5) eine radial und in Richtung seiner Längsachse verlaufende Ausnehmung (15) aufweist, in welcher ein Stift (16) geführt ist, der mittelbar oder unmittelbar in dem rohrförmigen Körper (1) quer zu diesem festgelegt ist, wobei die Anordnung derart ist, dass beim Herausziehen des Führungszapfens (5) aus dem rohrförmigen Körper der Stift (16) die Feder (13) spannt.

7. Transportstange nach einem der vorstehenden Ansprüche, **dadurch gekennzeichnet, dass** ein Adapterteil (19) zur Anpassung der Transportstange an unterschiedliche Abstände der vertikalen Tragelemente vorgesehen ist, wobei das Adapterteil innerhalb des Verankerungselementes (2), insbesondere innerhalb der Sacklochbohrung (12) des Führungszapfens (5), angeordnet und festgelegt ist.

8. Transportstange nach Anspruch 7, **dadurch gekennzeichnet, dass** das Adapterteil (19) durch ein flaches, lang gestrecktes Metallstück gebildet ist, das mehrere Bohrungen (20) entlang seiner Mittelachse aufweist, die zur Längenanpassung wahlweise belegbar sind.

9. Verankerungselement (2) für eine Transportstange mit Transportsicherung, insbesondere nach Anspruch 1, umfassend einen Verankerungskopf (3), der zum Einsetzen in Ausnehmungen von vertikalen Tragelementen vorgesehen ist, und einen Führungszapfen (5), der zum Einsetzen in ein Ende eines rohrförmigen Körpers (1) der Transportstange vorgesehen ist, wobei der Verankerungskopf und der Führungszapfen zusammen als ein einstückiges Bauteil ausgeführt sind, **dadurch gekennzeichnet, dass** zwischen dem Verankerungskopf (3) und dem Führungszapfen(5) ein Flanschabschnitt (6) angeordnet ist, der einen Anschlag für den Führungszapfen (5) beim Einsetzen in den rohrförmigen Körper (1) bildet und der zur Anbringung der Transportsicherung (10) vorgesehen ist, und dass der Verankerungskopf (3), der Führungszapfen(5) und der Flanschabschnitt (6) zusammen einstückig als Gussteil ausgebildet sind.

## Claims

1. A transport rail, in particular for accommodating pieces of clothing arranged on coat-hangers, comprising a tubular, elongate body (1), in each case one anchoring element (2) provided on the two ends of this body, wherein these two anchoring elements in each case comprise a guide peg (5) inserted into the tubular body (1) and an anchoring head (3) for the positive-fit insertion of the transport rail into recesses of carrier elements, and this peg and this head together are formed as one piece, and a telescopic securement bow (10) which extends parallel to the tubular body (1) and which in a first position secures the coat-hangers from an unintentional release from the tubular body and in a second position releases these, **characterised in that** the two anchoring elements (2) in each case in the region between their guide peg (5) and their anchoring head (3) comprise a flange section (6) which forms an abutment for the guide peg on inserting into the tubular body (1) and which comprises means (8,9) for linking on the securement bow (10), and that the anchoring head (3), the guide peg (5) and the flange section (6) are formed as one piece as a cast part.

2. A transport rail according to claim 1, **characterised in that** the two anchoring elements (2) are plastic injection moulded cast parts.

3. A transport rail according to claim 1 or 2, **characterised in that** the two anchoring elements (2) in particular in the region of their guide peg (5) are provided with a layer which is hard with respect to the base material, preferably a metal layer.

4. A transport rail according to claim 1, 2 or 3, **characterised in that** the flange section (6) comprises two bores (8) arranged parallel to the longitudinal axis of the guide peg (5) and symmetrically to a longitudinal axis (7) of the anchoring head (3), of which according to the side of the arrangement of the anchoring element (2) the one or the other bore serves for linking on the securement bow (10).

5. A transport rail according to claim 4, **characterised in that** the flange section (6) comprises a further bore (11) lying in the middle between the two bores (8), for linking on the safety bow (10).

6. A transport rail according to one of the preceding claims, **characterised in that** the guide peg (5) comprises a pocket bore (12) in which a helical spring is fixed, and that the guide peg (5) comprises a recess (15) which runs radially and in the direction of it longitudinal axis, in which a pin (16) is guided which is fastened directly or indirectly in the tubular body (1) transverse to this, wherein the arrangement is such that on withdrawing the guide peg (5) from the tubular body the pin (16) tensions the spring (13).

7. A transport rail according to one of the preceding claims, **characterised in that** there is provided an adapter part (19) for adapting the transport rail to different distances of the vertical carrier elements, wherein the adapter part is arranged and fastened within the anchoring element (2), in particular within the pocket bore (12) of the guide peg (5).

8. A transport rail according to claim 7, **characterised in that** the adapter part (19) is formed by a flat, elongate metal piece which comprises several bores (20) along its middle axis which may be selectively occupied for length adaptation.

9. An anchoring element (2) for a transport rail with a transport securement, in particular according to claim 1, comprising an anchoring head (3) which is provided for insertion into recesses of vertical carrier elements, and a guide peg (5) which is provided for insertion into one end of a tubular body (1) of the transport rail, wherein the anchoring head and the guide peg together are formed as a one piece component, **characterised in that** between the anchoring head (3) and the guide peg (5) there is arranged a flange section (6) which forms an abutment for the guide peg (5) on insertion into the tubular body (1) and which is provided for attachment of the transport securement (10), and that the anchoring head (3), the guide peg (5) and the flange section (6) are formed together as one piece as a cast part.

## Revendications

1. Tige de transport, notamment destinée à recevoir des vêtements disposés sur des cintres, comprenant un corps tubulaire (1) allongé, un élément d'ancrage (2) prévu à chacune des deux extrémités dudit corps, ces deux éléments d'ancrage présentant chacun un tenon de guidage (5) inséré dans le corps tubulaire (1) et une tête d'ancrage (3) pour l'insertion par complémentarité de formes de la tige de transport dans des évidements d'éléments de support, ce tenon et cette tête étant réalisés en commun d'un seul tenant, ainsi qu'un étrier de blocage de sécurité (10), télescopique, s'étendant parallèlement au corps tubulaire (1) et qui, dans une première position, bloque les cintres à l'encontre d'un décrochage involontaire du corps tubulaire, et les libère dans une seconde position, **caractérisée en ce que** les deux éléments d'ancrage (2) présentent chacun, dans la zone entre leur tenon de guidage (5) et leur tête d'ancrage (3), un tronçon de flasque (6) qui forme une butée pour le tenon de guidage, lors de l'insertion dans le corps tubulaire (1) et qui comporte des moyens (8, 9) destinés à articuler l'étrier de blocage de sécurité (10), et **en ce que** la tête d'ancrage (3), le tenon de guidage (5) et le tronçon de flasque (6) sont réalisés d'un seul tenant, sous forme d'une pièce moulée.

2. Tige de transport selon la revendication 1, **caractérisée en ce que** les deux éléments d'ancrage (2) sont réalisés sous forme de pièces en matière plastique, moulées par injection.

3. Tige de transport selon la revendication 1 ou 2, **caractérisée en ce que** les deux éléments d'ancrage (2) sont pourvus, notamment dans la zone de leur tenon de guidage (5), d'une couche dure par rapport au matériau de base, de préférence d'une couche métallique.

4. Tige de transport selon la revendication 1, 2 ou 3, **caractérisée en ce que** le tronçon de flasque (6) présente deux perçages (8) disposés parallèlement à l'axe longitudinal du tenon de guidage (5) et symétriquement par rapport à un axe longitudinal (7) de la tête d'ancrage (3), perçages dont l'un ou l'autre, suivant le côté où est disposé l'élément d'ancrage (2), sert à l'articulation de l'étrier de blocage de sécurité (10).

5. Tige de transport selon la revendication 4, **caractérisée en ce que** le tronçon de flasque (6) présente un autre perçage (11) disposé à mi-distance entre les deux perçages (8) pour l'articulation de l'étrier de blocage de sécurité (10).

6. Tige de transport selon l'une des revendications précédentes, **caractérisée en ce que** le tenon de guidage (5) présente un trou borgne (12), dans lequel est fixé un ressort hélicoïdal (13), et **en ce que** le tenon de guidage (5) présente un évidement (15) s'étendant radialement et dans la direction de son axe longitudinal, et dans lequel est guidée une broche (16) qui est fixée indirectement ou directement dans le corps tubulaire (1), transversalement à celui-ci, la disposition étant telle que lors de l'extraction du tenon de guidage (5) du corps tubulaire, la broche (16) produise la mise en tension du ressort (13).

7. Tige de transport selon l'une des revendications précédentes, **caractérisée en ce qu'**il est prévu un adaptateur (19) pour adapter la tige de transport à des distances d'espacement différentes des éléments de support verticaux, l'adaptateur étant disposé et fixé à l'intérieur de l'élément d'ancrage (2), notamment à l'intérieur du trou borgne (12) du tenon de guidage (5).

8. Tige de transport selon la revendication 7, **caractérisée en ce que** l'adaptateur (19) est formé par une pièce métallique plate, allongée, qui présente plusieurs perçages (20) le long de son axe central, lesquels peuvent être occupés au choix pour l'adaptation en longueur.

9. Elément d'ancrage (2) pour une tige de transport avec blocage de sécurité, notamment selon la revendication 1, comprenant une tête d'ancrage (3) qui est prévue pour être insérée dans des évidements d'éléments de support verticaux, et un tenon de guidage (5) qui est prévu pour être inséré dans une extrémité d'un corps tubulaire (1) de la tige de transport, la tête d'ancrage et le tenon de guidage étant réalisés en commun d'un seul tenant, **caractérisé en ce qu'**entre la tête d'ancrage (3) et le tenon de guidage (5), est disposé un tronçon de flasque (6), qui forme une butée pour le tenon de guidage (5), lors de l'insertion dans le corps tubulaire (1), et qui est prévu pour y rapporter le blocage de sécurité (10), et **en ce que** la tête d'ancrage (3), le tenon de guidage (5) et le tronçon de flasque (6) sont réalisés en commun d'un seul tenant, sous forme d'une pièce moulée.
